# DEMANDE DE BREVET EUROPEEN

(11) **EP 4 548 820 A1**
(43) Date de publication de la demande: **07.05.2025**
(21) Numéro de dépôt: 24211011.2
(22) Date de dépôt: 05.11.2024
(51) Int. Cl.: A47J 36/32

(54) **PROCÉDÉ DE RÉALISATION D'UNE PRÉPARATION CULINAIRE TELLE QU'UNE SAUCE OU UN FUMET**

(30) Priorité: 06.11.2023 FR 2312013
(71) Demandeur: SEB S.A., 69130 Ecully (FR)
(72) Inventeur: LE GOUEFF, Ronan, 69134 Ecully Cedex (FR); NESPOUX, Johan, 69134 Ecully Cedex (FR); PIRON, Benjamin, 69134 Ecully Cedex (FR)
(74) Mandataire: SEB Développement

(57) **Abrégé**

Procédé de réalisation d'une sauce, comprenant les étapes suivantes :
- faire cuire au moins un aliment,
- faire un ajout d'eau,
- faire une première réduction,
- mesurer au moins une fois la masse au cours de l'étape de réduction,
- comparer une première valeur cible (V_{c1}) avec la masse mesurée,
- arrêter l'étape de réduction si la masse mesurée est sensiblement la même que celle de la première valeur cible (V_{c1}),
- filtrer une partie liquide de la réduction,
- faire une deuxième réduction,
- mesurer au moins une fois la masse au cours de la réduction,
- comparer une seconde valeur cible (V_{c2}) avec la masse mesurée,
- arrêter l'étape de réduction si la masse mesurée est sensiblement la même que celle de la seconde valeur cible (V_{c2}).

## Description

### Domaine technique de l'invention

La présente invention concerne de manière générale les méthodes ou procédés de réalisation de préparations alimentaires ou culinaires mis en oeuvre par des appareils de préparation culinaire, et en particulier la présente invention concerne une méthode ou un procédé pour réaliser ou réduire une sauce, un fond de sauce ou encore un fumet de poisson.

### État de la technique

Il est connu dans l'art antérieur de proposer des méthodes ou procédés mis en oeuvre par des appareils de préparation culinaire pour cuire des aliments comme des légumes, des viandes, des poissons. Cependant, aucune solution n'est proposée pour préparer spécifiquement des sauces ou des fumets à servir avec ces aliments.

### Exposé de l'invention

Un but de la présente invention est de répondre aux inconvénients de l'art antérieur mentionnés ci-dessus et en particulier, tout d'abord, de proposer une méthode ou un procédé pour réaliser ou réduire une sauce, un fond de sauce ou encore un fumet de poisson.

Pour cela un premier aspect de l'invention concerne un procédé de réalisation d'une préparation culinaire, notamment d'une réduction de sauce, à mettre en oeuvre par un appareil de préparation culinaire,
l'appareil de préparation culinaire étant pourvu d'une cuve de cuisson, de moyens de cuisson, de moyens de mesure de masse,
le procédé comprenant les étapes suivantes :
   i- faire cuire au moins un aliment dans la cuve de cuisson,
   ii- inviter à faire un ajout d'un volume d'eau dans la cuve de cuisson et/ou faire l'acquisition d'une fin ou d'une déclaration de l'ajout du volume d'eau,
   iii- mesurer, ou recevoir une déclaration relative à, une masse du contenu de la cuve de cuisson, et calculer une première valeur cible de réduction du contenu de la cuve de cuisson en fonction de la masse mesurée,
   iv- faire réduire le contenu de la cuve de cuisson en poursuivant la chauffe,
   v- mesurer au moins une fois la masse du contenu de la cuve de cuisson au cours de l'étape de réduction iv-,
   vi- comparer la première valeur cible avec ladite au moins une masse mesurée à l'étape v-,
   vii- arrêter l'étape de réduction si la masse mesurée à l'étape v- est sensiblement la même que celle de la première valeur cible et sinon recommencer ou continuer l'étape iv-,
   viii- inviter à vider la cuve de cuisson et/ou faire l'acquisition d'un vidage de la cuve de cuisson,
   ix- faire l'acquisition d'un ajout dans la cuve de cuisson d'une partie liquide du contenu de la cuve de cuisson retiré à l'étape viii-,
   x- mesurer une masse du contenu de la cuve de cuisson et calculer une seconde valeur cible de réduction du contenu de la cuve de cuisson en fonction de la masse mesurée,
   xi- faire réduire le contenu de la cuve de cuisson,
   xii- mesurer au moins une fois la masse du contenu de la cuve de cuisson au cours de l'étape de réduction xi-,
   xiii- comparer la seconde valeur cible avec ladite au moins une masse mesurée à l'étape xii-,
   xiv- arrêter l'étape de réduction si la masse mesurée à l'étape xii- est sensiblement la même que celle de la seconde valeur cible et sinon recommencer ou continuer l'étape xi-.

Selon la mise en oeuvre ci-dessus, deux étapes de réduction sont prévues, pour procurer de manière reproductible une réduction savoureuse. De plus, des pesées sont prévues pour clôturer chaque étape de réduction, afin de garantir une réduction avec une consistance et une saveur particulières, sans goût de brulé, ni risque de dépôt solide sur la cuve de cuisson. Les mesures de masse mentionnées ci-dessus concernent la masse du contenu de la cuve de cuisson. Dans la pratique, le dispositif de mesure de masse comporte le plus souvent des pieds comprenant des organes de pesage, ainsi la quasi-totalité de l'appareil est pesée, et non seulement la cuve ; quelques réalisations peuvent concerner le pesage de la cuve seule. On comprend que la masse du contenu de la cuve seule n'est pas directement mesurée, la masse mesurée est celle du contenu de la cuve de cuisson, ainsi que de la partie de l'appareil portée par le dispositif de mesure de masse. La masse du contenu de la cuve de cuisson peut être obtenue de plusieurs manières, comme en faisant une tare avant une opération particulière de remplissage, ou en faisant un suivi continu de la masse lors de cette opération particulière de remplissage.

On peut aussi noter que les numéros des étapes et sous étapes n'impliquent pas un ordre obligatoire ni une exécution séquentielle. Autrement dit, les étapes et sous étapes peuvent être effectuées dans un ordre différent et/ou de manière simultanée.

L'invention peut être mieux définie par les caractéristiques suivantes, prises individuellement ou en combinaison.

Selon un mode de réalisation, l'étape i- est suivie par une étape i'consistant à faire la tare de la cuve de cuisson et de son contenu ou à recevoir une déclaration de la masse des aliments, mesurée avant et/ou après l'étape i-, contenus dans la cuve de cuisson. La masse du contenu de la cuve de cuisson peut être obtenue de manière fiable.

Selon un mode de réalisation, l'étape viii- comprend une étape viii'consistant :
- à faire la tare de la cuve de cuisson une fois vidée de son contenu,
- ou à recevoir une déclaration de la masse de la cuve de cuisson vide et/ou de la masse de l'appareil de préparation culinaire avec la cuve de cuisson vide,
- ou à extraire d'une unité de mémoire une information de la masse de la cuve de cuisson vide et/ou de la masse de l'appareil de préparation culinaire avec la cuve de cuisson vide. La masse du contenu de la cuve de cuisson peut être obtenue de manière fiable.

Selon un mode de réalisation, l'étape v- et/ou l'étape xii-comprend une mesure, effectuée en continu, ou plusieurs mesures, itératives à des instants séparés préférentiellement d'une période de temps de 500 ms maximum, de la masse de la cuve de cuisson et de son contenu ou de la masse du contenu de la cuve de cuisson ou de la masse de l'appareil de préparation culinaire avec la cuve de cuisson. La masse du contenu de la cuve de cuisson au cours de la réduction peut être obtenue de manière fiable.

Selon un mode de réalisation, au moins une partie de l'étape v-est effectuée simultanément avec au moins une partie de l'étape iv-, et dans lequel au moins une partie de l'étape xi- est effectuée simultanément avec au moins une partie de l'étape xii-.

Selon un mode de réalisation :
- l'étape iii- comprend une étape consistant à calculer une masse de l'eau ajoutée, et la première valeur cible de réduction du contenu de la cuve de cuisson est comprise entre 30% et 70% de la valeur de masse de l'eau ajoutée à l'étape ii-, préférentiellement entre 40% et 60% de la valeur de masse de l'eau ajoutée à l'étape ii-, et très préférentiellement correspond à la moitié de la valeur de masse de l'eau ajoutée à l'étape ii-,
- l'étape x- comprend une étape consistant à calculer une masse de la partie liquide ajoutée, et la seconde valeur cible de réduction du contenu de la cuve de cuisson est comprise entre 95% et 80% de la masse de la partie liquide ajoutée, préférentiellement entre 95% et 85% de la masse de la partie liquide ajoutée, et très préférentiellement correspond à 90% de la masse de la partie liquide ajoutée à l'étape ix-. Une sauce savoureuse est obtenue. Dans ce cas, les aliments initialement placés dans la cuve de cuisson peuvent comprendre une viande et/ou des légumes.

Selon un mode de réalisation, le procédé de réalisation d'une préparation culinaire est mis en oeuvre pour réaliser un fumet de poisson, et comprend une étape viii"- de validation d'un ajout d'au moins un aliment dans la cuve de cuisson, effectuée entre l'étape viii- et l'étape ix-.

Selon un mode de réalisation :
- l'étape iii- comprend une étape consistant à calculer une masse de l'eau ajoutée, et la première valeur cible de réduction du contenu de la cuve de cuisson est comprise entre 60% et 40% de la masse de l'eau ajoutée, et de préférence correspond à la moitié de la valeur de la masse de l'eau ajoutée,
- l'étape x- comprend une étape consistant à calculer une masse de la partie liquide ajoutée, et la seconde valeur cible de réduction du contenu de la cuve de cuisson est comprise entre 60% et 40% de la masse de la partie liquide ajoutée, et de préférence correspond à la moitié de la valeur de la masse de la partie liquide ajoutée à l'étape ix-. Une sauce ou un fumet de poisson savoureux est ainsi obtenu.

Selon un mode de réalisation, l'étape vii- est précédée par une étape supplémentaire vi'- de calcul d'un temps de réduction restant et d'une réduction supplémentaire si la valeur mesurée à l'étape v- est supérieure à la première valeur cible de réduction,
et/ou dans lequel l'étape xiv- est précédée par une étape supplémentaire xiii'-de calcul d'un temps de réduction restant et d'une réduction supplémentaire si la valeur mesurée à l'étape xii- est supérieure à la seconde valeur cible de réduction. On peut estimer si le procédé doit être allongé et avertir par exemple l'utilisateur en conséquence.

Selon un mode de réalisation, l'étape vii- est précédée par un retour à l'étape iv- de réduction du contenu de la cuve de cuisson si la valeur mesurée à l'étape v- est supérieure à la première valeur cible de réduction, et/ou dans lequel l'étape xiv- est précédée par un retour à l'étape xi- de réduction du contenu de la cuve de cuisson si la valeur mesurée à l'étape xii-est supérieure à la seconde valeur cible de réduction.

Selon un mode de réalisation, au moins une partie des mesures de masse et/ou au moins une partie des valeurs cibles sont enregistrées par des moyens d'enregistrement de l'appareil de préparation culinaire.

Selon un mode de réalisation, le procédé de réalisation d'une préparation culinaire comprend l'émission d'un premier message de fin de préparation aux étapes vii- et xiv- en fin de réduction.

Selon un mode de réalisation, le procédé de réalisation d'une préparation culinaire comprend :
- une étape i0- d'acquisition d'au moins un paramètre d'aliment caractérisant l'aliment à cuire et de calcul d'un volume d'eau cible en fonction dudit au moins un paramètre d'aliment, avant l'étape i-, et
- et dans lequel l'étape ii- comprend l'émission d'une information à l'utilisateur relative au volume d'eau cible. En fonction de l'aliment à cuire, de sa masse, on peut prévoir les quantités d'eau à ajouter et informer l'utilisateur en conséquence.

Selon un mode de réalisation, l'au moins un paramètre d'aliment est une masse et/ou un volume et/ou type d'aliment et/ou une concentration en eau d'aliment, pour définir de préférence le volume d'eau cible destiné à recouvrir les aliments contenus dans la cuve de cuisson.

Selon un mode de réalisation, l'information relative au volume d'eau cible est :
- une information indiquant un surplus d'eau ajoutée par rapport au volume d'eau cible, et/ou
- une information invitant l'utilisateur à retirer de l'eau, et/ou
- une information indiquant une carence en eau ajoutée par rapport au volume d'eau cible, et/ou
- une information invitant l'utilisateur à ajouter de l'eau.

Selon un mode de réalisation, le procédé de réalisation d'une préparation culinaire interdit le début de la réduction à l'étape iv- tant que la masse de la cuve de cuisson mesurée à l'étape iii- n'est pas sensiblement égale au volume d'eau cible. Cette mise en oeuvre évite de lancer le procédé si les conditions nécessaires à la réussite de la sauce ne sont pas réunies.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

[fig. 1] représente une vue générale simplifiée d'un appareil de préparation culinaire prévu pour mettre en oeuvre un procédé de préparation culinaire selon l'invention ;

[fig. 2] représente schématiquement le procédé de préparation culinaire selon l'invention.

### Description détaillée de mode(s) de réalisation

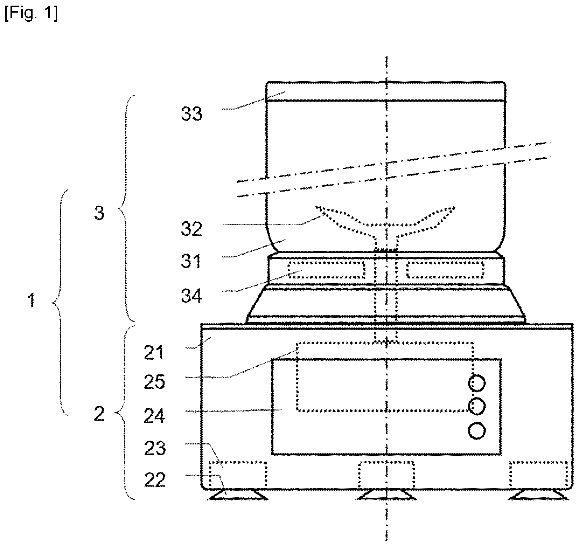

La figure 1 représente une vue générale simplifiée d'un appareil de préparation culinaire 1 (un appareil de préparation culinaire ménager) prévu pour mettre en oeuvre un procédé de préparation culinaire selon l'invention et comprenant :
- une base 2 prévue pour être posée sur un plan de travail,
- un ensemble de travail 3 accouplé de manière réversible à la base 2.

Dans le détail, la base 2 peut comprendre :
- un boîtier 21 formant une carcasse de la base 2,
- des pieds 22 pour reposer sur le plan de travail,
- des capteurs de poids 23, logés dans le boîtier 21 et prévus entre les pieds 22 et le reste de l'appareil de préparation culinaire 1 pour mesurer la masse de l'appareil de préparation culinaire 1 supportée par le plan de travail,
- une interface homme machine 24 pour permettre à un utilisateur de commander l'appareil de préparation culinaire 1, comprenant dans cet exemple un écran et des boutons de commande,
- des moyens de motorisation 25 (par exemple un moteur électrique), par exemple pour entraîner un outil de travail.

L'ensemble de travail 3 peut être amovible par rapport à la base 2 et peut quant à lui comprendre :
- une cuve de cuisson 31 prévue pour recevoir des aliments à préparer,
- de manière optionnelle, un outil de travail 32 (par exemple un couteau, un hachoir, une pale de mélange...) relié aux moyens de motorisation 25 par une transmission (un arbre d'entraînement par exemple),
- un couvercle 33, prévu pour coiffer la cuve de cuisson 31, en particulier si un outil de travail 32 est monté,
- des moyens de cuisson 34, typiquement des moyens de chauffage qui peuvent être des résistances électriques ou des moyens de chauffage par induction par exemple.

En ce qui concerne les capteurs de poids 23, dans l'exemple représenté, ces derniers pèsent l'ensemble de l'appareil de préparation culinaire, y compris le contenu de la cuve de cuisson. On peut prévoir un capteur de poids 23 par pied 22, mais on peut aussi prévoir un seul capteur de poids 23 pour tout l'appareil, on peut aussi prévoir d'agencer le ou les capteurs de poids sous la cuve de cuisson 31 pour la peser spécifiquement. On peut prévoir une balance placée sous l'appareil de préparation culinaire 1. On peut prévoir de lire les signaux émis par les capteurs de poids 23 de manière discrète, c'est-à-dire à des instants particuliers, de manière isolée ou répétée dans le temps. On peut prévoir alternativement de lire leurs signaux de manière continue, en temps réel. Par exemple, une mesure de poids de l'appareil de préparation culinaire 1 avant une opération de remplissage de la cuve de cuisson 31, et une mesure de poids de l'appareil de préparation culinaire 1 après l'opération de remplissage de la cuve de cuisson 31 permettent de connaître la masse du contenu de la cuve de cuisson 31. Par exemple, une mesure de poids de l'appareil de préparation culinaire 1 avant le début d'une opération de chauffage de la cuve de cuisson 31, et une mesure de poids de l'appareil de préparation culinaire 1 après ou au cours de l'opération de chauffage de la cuve de cuisson 31 permettent de connaître par exemple une masse perdue par évaporation de l'eau du contenu de la cuve de cuisson 31.

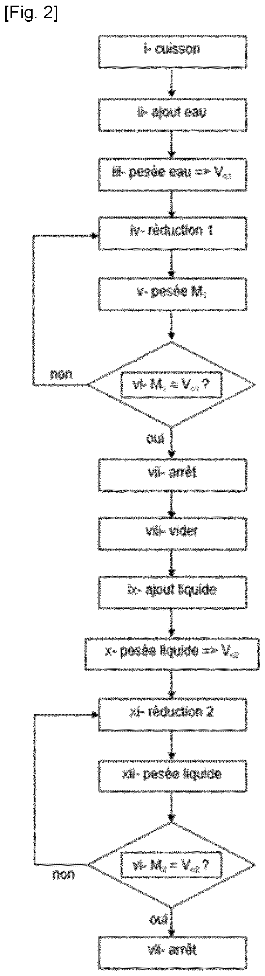

L'appareil de préparation culinaire 1 est prévu pour conduire divers programmes de préparation alimentaire, et la présente invention propose un procédé de préparation d'une sauce, et en particulier un procédé de préparation d'une réduction de sauce. A cet effet, la figure 2 présente différentes étapes pour mettre en oeuvre un tel procédé.

Dans le détail, le procédé de réalisation d'une préparation culinaire, notamment d'une réduction de sauce, à mettre en oeuvre par l'appareil de préparation culinaire 1, comprend les étapes suivantes :
i- Faire cuire au moins un aliment dans la cuve de cuisson 31 : on peut faire rissoler de la viande (ou du poisson, ou des carcasses de poisson) et/ou des légumes, ensembles et/ou de manière séquentielle. Dans le cas du poisson, on peut ajouter des arêtes après avoir fait rissoler les carcasses et les légumes. On peut prévoir une puissance de chauffe forte à moyenne pour faire rissoler le contenu de la cuve de cuisson. La puissance de chauffe peut bien évidemment varier au cours du temps lors de cette étape.
ii- Recouvrir d'eau : inviter à faire un ajout d'un volume d'eau dans la cuve de cuisson et/ou faire l'acquisition d'une fin ou d'une déclaration de l'ajout du volume d'eau. On peut bien entendu utiliser l'interface homme machine 24 pour faciliter ces étapes.
iii- Mesurer, ou recevoir une déclaration relative à, une masse du contenu de la cuve de cuisson. Cette étape peut comprendre une étape préliminaire à l'étape ii-, consistant à faire la tare de la cuve de cuisson 31 ou de l'appareil de préparation culinaire 1 (en fonction de l'agencement des capteurs de poids 23) et une étape consistant à peser, à la suite de l'ajout d'eau, la cuve de cuisson 31 ou l'appareil de préparation culinaire 1 pour déterminer la masse d'eau ajoutée. On peut aussi peser en continu lors de l'ajout d'eau. Ensuite, on peut calculer une première valeur cible V_{c1} de réduction du contenu de la cuve de cuisson en fonction de la masse mesurée.
iv- Faire réduire le contenu de la cuve de cuisson, en chauffant la cuve de cuisson 31 et son contenu avec les moyens de cuisson 34. On peut prévoir une puissance de chauffe faible à moyenne pour porter à ébullition ou à tout le moins faire mijoter le contenu de la cuve de cuisson. La puissance de chauffe peut bien évidemment varier au cours du temps lors de cette étape.
v- Mesurer au moins une fois la masse du contenu de la cuve de cuisson au cours de l'étape de réduction iv-. On peut prévoir une mesure continue ou séquentielle, avec des mesures répétées régulièrement, par exemple toutes les secondes ou tous les 500 ms.
vi- Comparer la première valeur cible avec ladite au moins une masse mesurée à l'étape v-. Cette comparaison permet de vérifier si une quantité suffisante d'eau s'est évaporée.
vii- Arrêter l'étape de réduction si la masse mesurée à l'étape v- est sensiblement la même que celle de la première valeur cible et sinon recommencer ou continuer l'étape iv-. A l'issue de cette étape, on a donc dans la cuve de cuisson 31 les aliments initialement présents et une quantité d'eau réduite, qui a donc été parfumée avec les arômes des aliments.
viii- Inviter à vider la cuve de cuisson et/ou faire l'acquisition d'un vidage de la cuve de cuisson. On peut utiliser l'interface homme machine 24 pour faciliter cette étape.
ix- Faire l'acquisition d'un ajout dans la cuve de cuisson d'une partie liquide du contenu de la cuve de cuisson retiré à l'étape viii-. Typiquement, entre l'étape viii- et l'étape ix-, une étape de filtration est effectuée, pour séparer les aliments solides de la partie liquide du contenu de la cuve de cuisson récupéré à l'étape viii-. On peut utiliser l'interface homme machine 24 pour faciliter cette étape et guider l'utilisateur. Alternativement, les étapes viii-et ix- peuvent simplement consister à retirer les aliments solides de la cuve de cuisson 31.
x- Mesurer une masse du contenu de la cuve de cuisson. Comme pour l'étape iii-, cette étape peut comprendre une étape préliminaire à l'étape ix-, consistant à faire la tare de la cuve de cuisson 31 ou de l'appareil de préparation culinaire 1 (en fonction de l'agencement des capteurs de poids 23) et une étape consistant à peser, à la suite de l'ajout de la partie liquide, la cuve de cuisson 31 ou l'appareil de préparation culinaire 1 pour déterminer la masse de liquide ajoutée. On peut aussi peser en continu lors de l'ajout de la partie liquide. Ensuite, on peut calculer une seconde valeur cible V_{c2} de réduction du contenu de la cuve de cuisson en fonction de la masse mesurée. Pour les fumets de poisson (obtenus avec des poissons et/ou carcasses de poisson), on peut prévoir d'ajouter des ingrédients comme de la crème ou des tomates.
xi- Faire réduire le contenu de la cuve de cuisson, en chauffant la cuve de cuisson 31 et son contenu avec les moyens de cuisson 34. On peut prévoir une puissance de chauffe faible à moyenne pour porter à ébullition ou à tout le moins faire mijoter le contenu de la cuve de cuisson. La puissance de chauffe peut bien évidemment varier au cours du temps lors de cette étape.
xii- Mesurer au moins une fois la masse du contenu de la cuve de cuisson au cours de l'étape de réduction xi-. On peut prévoir une mesure continue ou séquentielle, avec des mesures répétées régulièrement, par exemple toutes les secondes ou tous les 500 ms.
xiii- Comparer la seconde valeur cible avec ladite au moins une masse mesurée à l'étape xii-. Cette comparaison permet de vérifier si une quantité suffisante d'eau s'est évaporée
xiv- Arrêter l'étape de réduction si la masse mesurée à l'étape xii- est sensiblement la même que celle de la seconde valeur cible et sinon recommencer ou continuer l'étape xi-. Pour les fumets de poisson (obtenus avec des poissons et/ou carcasses de poisson), on peut prévoir d'ajouter un beurre manié pour épaissir la sauce.

Pour les viandes et/ou les légumes, on peut par exemple prévoir que la première valeur cible V_{c1} soit comprise entre 40% et 60% de la masse d'eau ajoutée, et soit par exemple de 50% de la masse d'eau ajoutée (on doit évaporer 50% de la quantité d'eau ajoutée à l'étape iv-) et que la seconde valeur cible V_{c2} soit comprise entre 95% et 85% de la partie liquide filtrée, et soit par exemple de 90% de la partie liquide filtrée (on doit évaporer 10% de la partie liquide filtrée et remise dans la cuve de cuisson 31 à l'étape ix-).

Pour les poissons ou carcasses de poisson, on peut par exemple prévoir que la première valeur cible V_{c1} soit comprise entre 40% et 60% de la masse d'eau ajoutée, et soit par exemple de 50% de la masse d'eau ajoutée (on doit évaporer 50% de la quantité d'eau ajoutée à l'étape iv) et que la seconde valeur cible V_{c2} soit comprise entre 60% et 40% de la partie liquide filtrée, et soit par exemple de 50% de la partie liquide filtrée (on doit évaporer 50% de la partie liquide filtrée et remise dans la cuve de cuisson 31 à l'étape ix-).

En résumé, pour les sauces ou fonds de viandes, on peut avoir les étapes principales suivantes :
1) Rissoler la viande.
2) Rissoler les légumes (seuls ou avec la viande).
3) Recouvrir d'eau, avec par exemple une quantité de liquide indiquée via l'interface homme machine 24 (Faire tare avant de verser l'eau (=> enregistrement d'une valeur PO) - ajouter l'eau (=>peser, déduire la masse ajoutée et enregistrer valeur P1)).
4) Fond : Faire réduire de moitié (sans mouvement de l'outil de travail 32 si celui-ci est installé), peser en continu et arrêt de la chauffe lorsque le contenu de la cuve de cuisson a perdu une masse sensiblement égale à 50% de P1, puis avertir de la fin de la réduction.
5) Filtrer (vider le bol des aliments solides et du jus). Faire par exemple la tare avant de verser le jus (=> enregistrement valeur P3).
6) Rajouter le jus dans le bol, mesurer et déduire la masse de la quantité de jus (=> enregistrement valeur P4).
7) Réduire le jus de 10% : peser en continu et arrêt de la chauffe lorsque le contenu de la cuve de cuisson a perdu une masse sensiblement égale à 10% de P4

Pour les sauces ou fond de poisson/crustacés :
1) Rissoler les légumes et les carcasses.
2) Ajouter les arrêtes.
3) Recouvrir d'eau, avec par exemple une quantité de liquide indiquée via l'interface homme machine 24 (Faire tare avant de verser l'eau (=> enregistrement d'une valeur PO) - ajouter l'eau (=> peser, déduire la masse ajoutée et enregistrer valeur P1)).
4) Faire réduire de moitié (sans mouvement de l'outil de travail 32 si celui-ci est installé), peser en continu et arrêt de la chauffe lorsque le contenu de la cuve de cuisson a perdu une masse sensiblement égale à 50% de P1, puis avertir de la fin de la réduction.
5) Filtrer (vider le bol des aliments solides et du jus). Faire par exemple la tare avant de verser le jus (=> enregistrement valeur P3).
6) Ajouter le jus dans la cuve de cuisson, mesurer la masse (=>déduire la masse de jus ajouté, enregistrement valeur P4). On ajoute des ingrédients (par exemple de la crème ou des tomates...).
7) Réduire de 50%, avec pesée en continu et arrêt de la chauffe lorsque le contenu de la cuve de cuisson a perdu une masse sensiblement égale à 50 % de P4.
8) Ajouter un beurre manié à la sauce pour épaissir.

### Application industrielle

Un procédé de préparation alimentaire selon la présente invention, et sa mise en oeuvre par un appareil de préparation culinaire, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Procédé de réalisation d'une préparation culinaire, notamment d'une réduction de sauce, à mettre en oeuvre par un appareil de préparation culinaire (1),
l'appareil de préparation culinaire (1) étant pourvu d'une cuve de cuisson (31), de moyens de cuisson (34), de moyens de mesure de masse, le procédé comprenant les étapes suivantes :
i- faire cuire au moins un aliment dans la cuve de cuisson (31),
ii- inviter à faire un ajout d'un volume d'eau dans la cuve de cuisson (31) et/ou faire l'acquisition d'une fin ou d'une déclaration de l'ajout du volume d'eau,
iii- mesurer, ou recevoir une déclaration relative à, une masse du contenu de la cuve de cuisson (31), et calculer une première valeur cible (V_{c1}) de réduction du contenu de la cuve de cuisson (31) en fonction de la masse mesurée,
iv- faire réduire le contenu de la cuve de cuisson (31) en poursuivant la chauffe,
v- mesurer au moins une fois la masse du contenu de la cuve de cuisson (31) au cours de l'étape de réduction iv-,
vi- comparer la première valeur cible (V_{c1}) avec ladite au moins une masse mesurée à l'étape v-,
vii- arrêter l'étape de réduction si la masse mesurée à l'étape v- est sensiblement la même que celle de la première valeur cible (V_{c1}) et sinon recommencer ou continuer l'étape iv-,
viii- inviter à vider la cuve de cuisson (31) et/ou faire l'acquisition d'un vidage de la cuve de cuisson (31),
ix- faire l'acquisition d'un ajout dans la cuve de cuisson (31) d'une partie liquide du contenu de la cuve de cuisson (31) retiré à l'étape viii-,
x- mesurer une masse du contenu de la cuve de cuisson (31) et calculer une seconde valeur cible (V_{c2}) de réduction du contenu de la cuve de cuisson (31) en fonction de la masse mesurée,
xi- faire réduire le contenu de la cuve de cuisson (31),
xii- mesurer au moins une fois la masse du contenu de la cuve de cuisson (31) au cours de l'étape de réduction xi-,
xiii- comparer la seconde valeur cible (V_{c2}) avec ladite au moins une masse mesurée à l'étape xii-,
xiv- arrêter l'étape de réduction si la masse mesurée à l'étape xii- est sensiblement la même que celle de la seconde valeur cible (V_{c2}) et sinon recommencer ou continuer l'étape xi-.

2. Procédé de réalisation d'une préparation culinaire selon la revendication 1, dans lequel l'étape i- est suivie par une étape i'- consistant à faire la tare de la cuve de cuisson (31) et de son contenu ou à recevoir une déclaration de la masse des aliments, mesurée avant et/ou après l'étape i-, contenus dans la cuve de cuisson (31).

3. Procédé de réalisation d'une préparation culinaire selon la revendication 1 ou 2, dans lequel l'étape viii- comprend une étape viii'-consistant :
- à faire la tare de la cuve de cuisson (31) une fois vidée de son contenu,
- ou à recevoir une déclaration de la masse de la cuve de cuisson (31) vide et/ou de la masse de l'appareil de préparation culinaire (1) avec la cuve de cuisson (31) vide,
- ou à extraire d'une unité de mémoire une information de la masse de la cuve de cuisson (31) vide et/ou de la masse de l'appareil de préparation culinaire (1) avec la cuve de cuisson (31) vide.

4. Procédé de réalisation d'une préparation culinaire selon l'une des revendications 1 à 3, dans lequel l'étape v- et/ou l'étape xii-comprend une mesure, effectuée en continu, ou plusieurs mesures, itératives à des instants séparés préférentiellement d'une période de temps de 500 ms maximum, de la masse de la cuve de cuisson (31) et de son contenu ou de la masse du contenu de la cuve de cuisson (31) ou de la masse de l'appareil de préparation culinaire (1) avec la cuve de cuisson (31).

5. Procédé de réalisation d'une préparation culinaire selon l'une des revendications 1 à 4, dans lequel au moins une partie de l'étape v-est effectuée simultanément avec au moins une partie de l'étape iv-, et dans lequel au moins une partie de l'étape xi- est effectuée simultanément avec au moins une partie de l'étape xii-.

6. Procédé de réalisation d'une préparation culinaire selon l'une des revendications 1 à 5, dans lequel :
- l'étape iii- comprend une étape consistant à calculer une masse de l'eau ajoutée, et la première valeur cible (V_{c1}) de réduction du contenu de la cuve de cuisson (31) est comprise entre 30% et 70% de la valeur de masse de l'eau ajoutée à l'étape ii-, préférentiellement entre 40% et 60% de la valeur de masse de l'eau ajoutée à l'étape ii-, et très préférentiellement correspond à la moitié de la valeur de masse de l'eau ajoutée à l'étape ii-,
- l'étape x- comprend une étape consistant à calculer une masse de la partie liquide ajoutée, et la seconde valeur cible (V_{c2}) de réduction du contenu de la cuve de cuisson (31) est comprise entre 95% et 80% de la masse de la partie liquide ajoutée, préférentiellement entre 95% et 85% de la masse de la partie liquide ajoutée, et très préférentiellement correspond à 90% de la masse de la partie liquide ajoutée à l'étape ix-.

7. Procédé de réalisation d'une préparation culinaire selon l'une des revendications 1 à 6, pour réaliser un fumet de poisson, comprenant une étape viii"- de validation d'un ajout d'au moins un aliment dans la cuve de cuisson (31), effectuée entre l'étape viii- et l'étape ix-.

8. Procédé de réalisation d'une préparation culinaire selon la revendication 7, dans lequel :
- l'étape iii- comprend une étape consistant à calculer une masse de l'eau ajoutée, et la première valeur cible (V_{c1}) de réduction du contenu de la cuve de cuisson (31) est comprise entre 60% et 40% de la masse de l'eau ajoutée, et de préférence correspond à la moitié de la valeur de la masse de l'eau ajoutée,
- l'étape x- comprend une étape consistant à calculer une masse de la partie liquide ajoutée, et la seconde valeur cible (V_{c2}) de réduction du contenu de la cuve de cuisson (31) est comprise entre 60% et 40% de la masse de la partie liquide ajoutée, et de préférence correspond à la moitié de la valeur de la masse de la partie liquide ajoutée à l'étape ix-.

9. Procédé de réalisation d'une préparation culinaire selon l'une des revendications 1 à 8, dans lequel l'étape vii- est précédée par une étape supplémentaire vi'- de calcul d'un temps de réduction restant et d'une réduction supplémentaire si la valeur mesurée à l'étape v- est supérieure à la première valeur cible (V_{c1}) de réduction,
et/ou dans lequel l'étape xiv- est précédée par une étape supplémentaire xiii'-de calcul d'un temps de réduction restant et d'une réduction supplémentaire si la valeur mesurée à l'étape xii- est supérieure à la seconde valeur cible (V_{c2}) de réduction.

10. Procédé de réalisation d'une préparation culinaire selon l'une des revendications 1 à 9, dans lequel l'étape vii- est précédée par un retour à l'étape iv- de réduction du contenu de la cuve de cuisson (31) si la valeur mesurée à l'étape v- est supérieure à la première valeur cible (V_{c1}) de réduction,
et/ou dans lequel l'étape xiv- est précédée par un retour à l'étape xi- de réduction du contenu de la cuve de cuisson (31) si la valeur mesurée à l'étape xii- est supérieure à la seconde valeur cible (V_{c2}) de réduction.

11. Procédé de réalisation d'une préparation culinaire selon l'une des revendications 1 à 10, dans lequel au moins une partie des mesures de masse et/ou au moins une partie des valeurs cibles sont enregistrées par des moyens d'enregistrement de l'appareil de préparation culinaire (1).

12. Procédé de réalisation d'une préparation culinaire selon l'une des revendications 1 à 11, comprenant l'émission d'un premier message de fin de préparation aux étapes vii- et xiv- en fin de réduction.

13. Procédé de réalisation d'une préparation culinaire selon l'une des revendications 1 à 12, comprenant :
- une étape i0- d'acquisition d'au moins un paramètre d'aliment caractérisant l'aliment à cuire et de calcul d'un volume d'eau cible en fonction dudit au moins un paramètre d'aliment, avant l'étape i-, et
- et dans lequel l'étape ii- comprend l'émission d'une information à l'utilisateur relative au volume d'eau cible.

14. Procédé de réalisation d'une préparation culinaire selon la revendication 13, dans lequel l'au moins un paramètre d'aliment est une masse d'aliment et/ou un volume d'aliment et/ou un type d'aliment et/ou une concentration en eau d'aliment, pour définir de préférence le volume d'eau cible destiné à recouvrir les aliments contenus dans la cuve de cuisson (31).

15. Procédé de réalisation d'une préparation culinaire selon l'une des revendications 13 ou 14, dans lequel l'information relative au volume d'eau cible est :
- une information indiquant un surplus d'eau ajoutée par rapport au volume d'eau cible, et/ou
- une information invitant l'utilisateur à retirer de l'eau, ou
- une information indiquant une carence en eau ajoutée par rapport au volume d'eau cible, et/ou
- une information invitant l'utilisateur à ajouter de l'eau.

16. Procédé de réalisation d'une préparation culinaire selon l'une des revendications 13 à 15, interdisant le début de la réduction à l'étape iv- tant que la masse du contenu de la cuve de cuisson (31) mesurée à l'étape iii- n'est pas sensiblement égale au volume d'eau cible.
